# EUROPÄISCHE PATENTSCHRIFT

(11) **EP 0 891 808 B1**
(45) Veröffentlichungstag und Bekanntmachung des Hinweises auf die Patenterteilung: **27.03.2002**
(21) Anmeldenummer: 98810614.2
(22) Anmeldetag: 02.07.1998
(51) Int. Cl.: B01J 2/12, A23G 3/26

(54) **Trommel zum Aufnehmen eines teilchenförmigen Gutes, Einrichtung mit einer Trommel und Verfahren zur Herstellung der Trommel**
Drum for holding a granular product, apparatus containing a drum and method for making the drum
Tambour pour recevoir un produit en particule, dispositif contenant un tambour et procédé pour la fabrication du tambour

(30) Priorität: 17.07.1997 CH 175597
(43) Veröffentlichungstag der Anmeldung: 20.01.1999
(73) Patentinhaber: Glatt Maschinen- und Apparatebau AG, CH-4133 Pratteln (CH)
(72) Erfinder: Boos, Günther, 79713 Bad Säckingen (DE)
(74) Vertreter: Eder, Carl E.

(56) Entgegenhaltungen:
- EP-A- 0 137 151
- FR-A- 2 065 417
- FR-A- 2 359 637
- US-A- 3 952 757
- DATABASE WPI Section Ch, Week 8718 Derwent Publications Ltd., London, GB; Class L02, AN 87-128009 XP002058281 & SU 1 257 065 A (URALS CONS MAT RES) , 15. September 1986
- PATENT ABSTRACTS OF JAPAN vol. 008, no. 199 (C-242), 12. September 1984 & JP 59 091865 A (KUMETA SEISAKUSHO:KK), 26. Mai 1984

## Beschreibung

Die Erfindung betrifft eine Trommel zum Aufnehmen und Bewegen eines teilchenförmigen Gutes, das insbesondere zur Bildung eines Arzneimittels dient.

Eine aus der EP 0 137 151 A und der dieser entsprechenden US 4 543 906 A bekannte Einrichtung zum Überziehen von Teilchen besitzt eine um eine Achse drehbare Trommel zum Aufnehmen und Bewegen eines teilchenförmigen Gutes. Die Trommel hat einen zylindrischen Wandabschnitt mit Perforationslöchern. Diese haben bei auf dem Markt bekannten, ungefähr gemäss den genannten Patentschriften ausgebildeten Einrichtungen lichte Weiten von etwa 2,5 mm bis 4 mm. Bei der Herstellung von Arzneimitteln sind jedoch häufig Teilchen zu verarbeiten, deren Durchmesser weniger als 2,5 mm und zum Beispiel ungefähr 0,2 mm bis 1 mm betragen. Damit so kleine Teilchen nicht durch die Perforationslöcher hindurch aus der Trommel herausfallen, wird jeweils mindestens ein textiles Gewebe mit Halterungen lösbar in der Trommel befestigt. Dabei ist es jedoch beim Bewegen und Behandeln von feinen Teilchen praktisch unvermeidbar, dass Teilchen und Abriebmaterial von solchen zwischen das Gewebe und die Wand der Trommel gelangen. Bei der Herstellung von Arzneimitteln werden hohe Anforderungen an die Reinheit der Produkte gestellt. Die Einrichtungen müssen daher häufig und insbesondere bei einem Wechsel des Produkts gereinigt werden. Dabei müssen die Halterungen und das Gewebe aus der Trommel ausgebaut, die Trommel, die Halterungen und das Gewebe getrennt gereinigt und danach das Gewebe und die Halterungen wieder in die Trommel eingebaut werden. Dies erfordert viel Zeit und verteuert den Betrieb der Einrichtungen. Ferner werden die textilen Gewebe bei der Benutzung und beim Herausnehmen aus der Trommel, Waschen sowie wieder Einsetzen in die Trommel leicht beschädigt und müssen in der Praxis nach relativ kurzer Zeit ersetzt werden.

Eine aus der SU 1 257 065 A bekannte Einrichtung zum Granulieren von Schlacke besitzt eine geneigte, perforierte Trommel, die durch ein Netz bedeckt ist. Aus dem zitierten Dokument geht nicht hervor, woraus das Netz besteht und wo sowie wie das Netz befestigt ist. Es scheint daher plausibel, dass diese Granuliereinrichtung ähnliche Nachteile hat wie die vorher beschriebenen Einrichtungen, bei denen ein textiles Gewebe lösbar mit Halterungen befestigt ist.

Aus der JP 59 091 865 A ist eine Einrichtung zur Herstellung von Seetang-Granulat bekannt. Die Einrichtung besitzt eine Trommel mit einer perforierten Wand und einer auf deren Innenseite angeordneten, gewellten Rasterblende. Diese ist aus einer Netzplatte mit Löchern gebildet. Da die Rasterblende gewellt ist, kann sie höchstens bei den Wellenscheiteln an der Wand der Trommel anliegen. Zwischen der Wand und der Rasterblende sind daher Zwischenräume vorhanden, in denen sich verarbeitetes Material, d.h. Seetang und allfälliges sonstiges, zur Verarbeitung zugefügtes Material ansammeln kann. Die Reinigung der Trommel ist daher schwierig, aufwendig und zeitraubend. Im übrigen geht aus der englischen Zusammenfassung nicht hervor, aus was für Material die Rasterblende besteht und wo sowie wie sie befestigt ist.

Der Erfindung liegt daher die Aufgabe zugrunde, eine Trommel zu schaffen, die Nachteile der bekannten Trommeln vermeidet, insbesondere auch zum Aufnehmen, Bewegen und Behandeln eines Gutes mit feinen Teilchen verwendbar ist und trotzdessen gut sowie mit geringem Arbeitsaufwand gereinigt werden kann und dauerhaft ist.

Diese Aufgabe wird gemäss der Erfindung durch eine Trommel mit den Merkmalen des Anspruchs 1 gelöst.

Die Erfindung betrifft ferner eine Einrichtung mit einer Trommel gemäss dem Anspruch 8 und ein Verfahren zur Herstellung der Trommel gemäss dem Anspruch 10.

Vorteilhafte Ausgestaltungen der Trommel, der Einrichtung und des Verfahrens gehen aus den abhängigen Ansprüchen hervor.

Das bzw. jedes innen an der Wand der Trommel angeordnete Drahtgewebe kann einlagig oder mehrlagig sein. Wenn das Drahtgewebe mehrlagig ist und zwei oder drei oder eventuell noch mehr Drahtgewebe-Lagen besitzt, können mindestens zwei Drahtgewebe-Lagen unterschiedliche lichte Maschenweiten aufweisen. Die feinste, die kleinste lichte Maschenweite aufweisende Drahtgewebe-Lage wird dann beispielsweise aussen durch mindestens eine gröbere, zwischen ihr und der perforierten Wand der Trommel angeordnete Stütz-Drahtgewebe-Lage abgestützt. Die feinste Drahtgewebe-Lage kann zum Beispiel auf ihrer Innenseite noch durch eine wieder gröbere Schutz-Drahtgewebe-Lage geschützt sein oder die innerste Drahtgewebe-Lage bilden. Wenn ein Drahtgewebe zwei oder mehr Lagen mit verschiedenen lichten Maschenweiten besitzt, bestimmt die feinste Drahtgewebe-Lage die lichte Weite der Poren oder Öffnungen des ganzen, mehrlagigen Drahtgewebes. Die lichte Maschenweite des ganzen Drahtgewebes ist dann dementsprechend gleich der lichten Maschenweite der feinsten, die kleinste lichte Maschenweite aufweisenden Drahtgewebe-Lage. Das bzw. jedes innen an der Wand der Trommel befestigte Drahtgewebe hat gemäss der Erfindung eine lichte Maschenweite, die kleiner als die lichte Weite der Perforationslöcher ist, und hält daher auch Teilchen in der Trommel zurück, die kleiner als die lichte Weite der Perforationslöcher sind. Die lichte Maschenweite kann bei der Herstellung der Trommel in weiten Grenzen variiert und entsprechend der Grösse der feinsten Teilchen eines zu verarbeitenden teilchenförmigen Gutes festgelegt werden.

Gemäss der Erfindung liegt mindestens ein Drahtgewebe im wesentlichen mit seiner ganzen Aussenfläche an der Innenfläche der Wand der Trommel an und ist im wesentlichen bei seiner ganzen Aussenfläche an der perforierten Wand befestigt, nämlich, vorzugsweise ohne Zusatz-Werkstoff, an der perforierten Wand angesintert. Hier sei noch eine Anmerkung zur Bedeutung der vorgängigen Begriffe "im wesentlichen" eingefügt. Das bzw. jedes Drahtgewebe kann bei den Perforationslöchern der Wand natürlich nicht an dieser anliegen, soll aber im abgedeckten Abschnitt der Wand im wesentlichen an allen nicht von Perforationslöchern eingenommenen Bereichen anliegen. Da ein Drahtgewebe ja aus Drähten besteht, ist die Aussenfläche des Drahtgewebes nicht vollständig glatt und in abgwickeltem Zustand nicht vollständig eben. Das bzw. jedes Drahtgewebe soll jedoch im wesentlichen bei allen seine Aussenfläche definierenden und sich nicht gerade im Bereich eines Perforationslochs befindenden Drahtabschnitten an der Wand anliegen und befestigt, nämlich angesintert sein. Beim Behandeln eines teilchenförmigen Gutes können dann praktisch keine Gut-Teilchen, kein Abriebmaterial des Gutes und kein Sprühmaterial und/oder sonstiges Material zwischen die Wand und das oder die Drahtgewebe gelangen. Das bzw. jedes Drahtgewebe kann gemeinsam mit der restlichen Trommel innerhalb von dieser beispielsweise durch Besprühen mit einer Reinigungsflüssigkeit von der Aussenseite der Trommel und/oder vom Innenraum der Trommel her schnell und gut gereinigt werden. Das metallische Material des bzw. jedes Drahtgewebes hat eine höhere Festigkeit als die Materialien der bekannten, textilen Gewebe. Dadurch dass das bzw. jedes Drahtgewebe zudem im wesentlichen bei seiner ganzen Aussenfläche unmittelbar fest mit der Innenfläche der Wand der Trommel verbunden, nämlich vorzugsweise an dieser angesintert ist, werden die Stabilität und die Dauerhaftigkeit des Drahtgewebes noch zusätzlich vergrössert. Das bzw. jedes an der Wand der Trommel befestigte Drahtgewebe hat daher auch eine hohe Lebensdauer.

Die Drähte des bzw. jedes Drahtgewebes sind bei den Stellen, bei denen sie einander kreuzen und berühren, vorzugsweise miteinander versintert. Dies erhöht die Festigkeit des Drahtgewebes und verhindert, dass Teilchen des Gutes bei Kreuzungsstellen zwischen einander kreuzende Drähte gelangen und dort eingeklemmt werden. Die von den Maschen begrenzten Öffnungen oder Poren eines einlagigen Drahtgewebes oder mindestens der feinsten Drahtgewebe-Lage eines mehrlagigen Drahtgewebes können eventuell bei der Innenfläche des Gewebes bzw. der Gewebe-Lage höchstens gleich weit wie im mittleren Bereich oder sogar enger als in diesem sein. Das Drahtgewebe oder die genannte Drahtgewebe-Lage hält dann die Teilchen des teilchenförmigen Gutes schon bei der Innenfläche und nicht erst im mittleren Bereich des Drahtgewebes bzw. der genannten Drahtgewebe-Lage zurück. Dadurch wird die Reinigbarkeit der Trommel noch verbessert.

Der Erfindungsgegenstand wird anschliessend anhand in der Zeichnung dargestellter Ausführungsbeispiele erläutert. In der Zeichnung zeigt
Fig. 1 eine vereinfachte Stirnansicht einer Einrichtung mit einer Trommel zum Bewegen und Behandeln eines teilchenförmigen Gutes,
Fig. 2 eine vereinfachte Seitenansicht der Einrichtung, Fig. 3 einen Axialschnitt durch die Trommel,
Fig. 4 einen in der Fig. 3 mit IV bezeichneten, schematischen Ausschnitt aus der Trommel und
Fig. 5 einen der Fig. 4 entsprechenden Ausschnitt aus einer Trommel mit einem mehrlagigen Drahtgewebe.

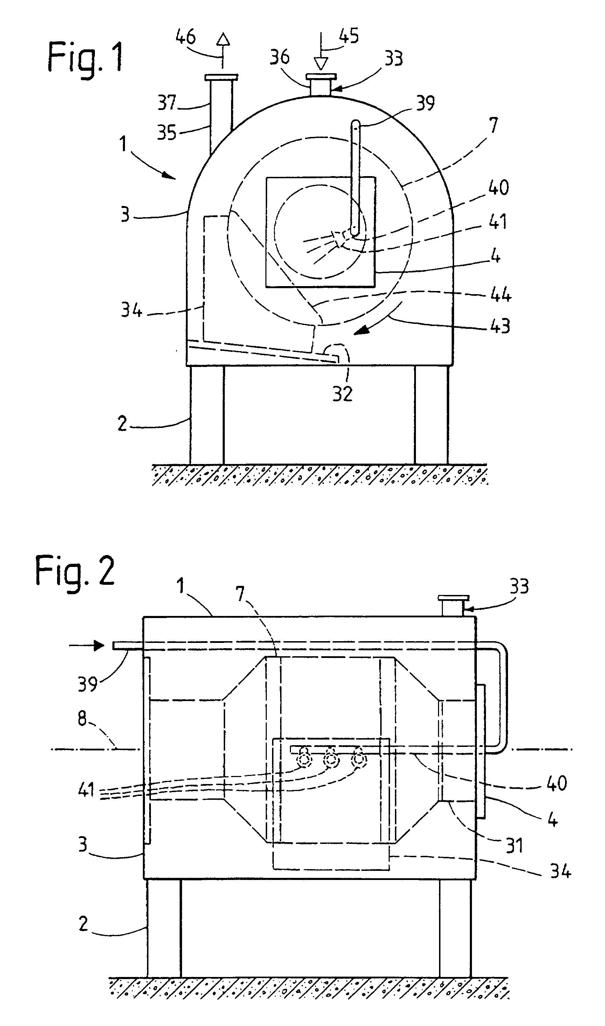

Die in den Figuren 1 und 2 ersichtliche Einrichtung 1 dient zum Bewegen und Behandeln eines teilchenförmigen Gutes, beispielsweise zum Agglomerieren sowie Pelletisieren und/oder Überziehen von Gut-Teilchen zur Bildung eines Arzneimittels. Die Einrichtung 1 besitzt ein Gestell 2 und ein an diesem befestigtes Gehäuse 3. Dessen Wandung hat eine vertikale Stirnwand mit einer Öffnung. Diese ist durch ein Verschlusselement 4 verschlossen, das aus einer Tür mit zwei Flügeln besteht. Das Gehäuse 3 besitzt noch andere Öffnungen, die mit nicht gezeichneten, verstellbaren und/oder lösbar befestigten Verschlusselementen verschlossen sind. Das Gehäuse 3 umschliesst einen Gehäuse-Innenraum, der allseitig mindestens staubdicht und beispielsweise auch gasdicht gegen die Umgebung abgeschlossen ist.

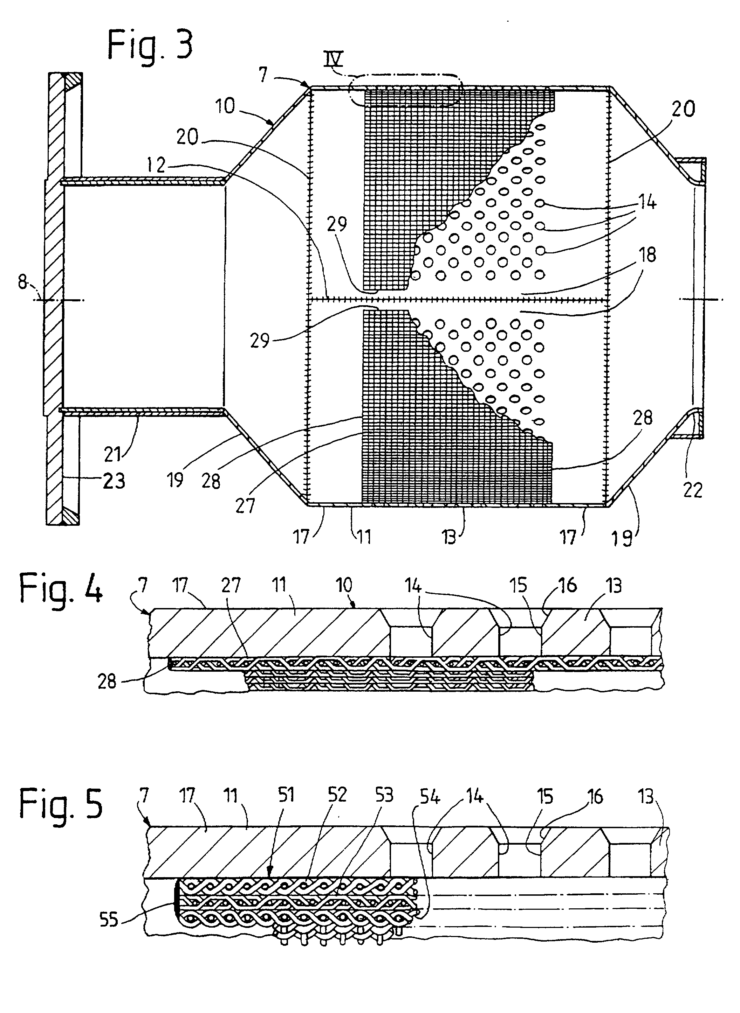

Eine Trommel 7 ist im Gehäuse-Innenraum angeordnet. Die Trommel 7 ist im wesentlichen rotationssymmetrisch zu einer horizontalen Achse 8 und noch separat in Fig. 3 sowie teilweise in Fig. 4 gezeichnet. Die Trommel 7 besitzt eine die Achse 8 und im Querschnitt einen Trommel-Innenraum umschliessende Wandung 10. Diese besitzt eine im Querschnitt im allgemeinen kreisförmige, nämlich im wesentlichen zylindrische Wand 11 bzw. einen zylindrischen Mantel. Die zylindrische Wand 11 hat eine Innen- sowie eine Aussenfläche und besteht, wie vorzugsweise auch die restlichen Teile der Wandung 10, aus einem metallischen, schweissbaren Material, beispielsweise rostfreiem Stahl. Die zylindrische Wand ist aus einem viereckförmigen, d.h. rechteckförmigen oder eventuell quadratförmigen Blechstück gebildet. Dieses hat ursprünglich zwei gerade, entlang der Achse 8 verlaufende, zu dieser parallele, aneinander anstossende Ränder, die bei der fertigen Trommel durch eine Schweissnaht 12 fest, unlösbar, dicht und derart miteinander verbunden sind, dass die an die genannten Ränder angrenzenden Abschnitte des Blechstücks bzw. der Wand 11 bei der Schweissnaht mindestens annähernd glatt, stetig, stufenlos und fugenlos ineinander übergehen. Der mittlere Wandabschnitt 13 der zylindrischen Wand 11 ist gasdurchlässig, nämlich im allgemeinen perforiert und mit Perforationslöchern 14 versehen. Diese sind alle gleich ausgebildet. Jedes Perforationsloch 14 hat gemäss Fig. 4 einen in die Innenfläche der Wand 12 mündenden, zylindrischen Lochabschnitt 15 und einen sich von diesem weg nach aussen erweiternden, konischen Lochabschnitt 16. Die Perforationslöcher 14 sind im allgemeinen gleichmässig entlang der Achse 8 und um diese herum verteilt. Der mittlere, im allgemeinen perforierte Wandabschnitt 13 der zylindrischen Wand 11 hat jedoch bei der zur Achse 8 parallelen Schweissnaht 12 auf beiden Seiten von dieser einen entlang von dieser verlaufenden, streifenförmigen, schmalen, kompakten, d.h. lochfreien Wandabschnitt 18. Die zylindrische Wand 11 hat zwei kreisförmige Ränder und zwischen diesen und dem mittleren, perforierten Wandabschnitt 13 je einen ringförmigen, kompakten, d.h. lochfreien Wandabschnitt 17.

Die Wandung 10 hat ferner zwei an die beiden Enden der zylindrischen Wand 11 anschliessende, sich von dieser weg verjüngende, konische Wände 19. Jede von diesen ist an ihrem weiteren Ende durch eine Schweissnaht 20 fest, unlösbar und dicht mit der zylindrischen Wand 11 verbunden. Das engere Ende der sich in den Figuren 1 und 2 links befindenden, konischen Wand 19 ist mit einem zylindrischen Hals 21 verschweisst. Das engere Ende der sich in den Figuren 1 und 2 rechts befindenden, konischen Wand 19 ist mit einem nur sehr kurzen, an sie angeformten oder mit ihr verschweissten Hals 22 verbunden. Die konischen Wände 19 und die Hälse 21, 22 sind kompakt - d.h. lochfrei - und gasdicht. Der Hals 21 ist an seinem den Wänden 11, 19 abgewandten Ende mit einer im allgemeinen, ebenen, radialen, in radialer Richtung über ihn hinausragenden Scheibe 23 verbunden, nämlich verschweisst. Die Scheibe 23 schliesst den Innenraum der Trommel beim Ende des Halses 21 dicht gegen die Umgebung ab. Im übrigen ist der Hals 21 noch mit einer ihn über seine ganze Länge umschliessenden Hülse verstärkt, die an ihren Enden mit dem Hals 21 und/oder mit der Scheibe 23 sowie der sich näher bei dieser befindenden, konischen Wand 19 verschweisst ist. Der andere, kurze Hals 22 ist an seinem freien Ende offen. Im übrigen sind dieser Hals 22 und die mit diesem verbundene konische Wand 19 aussen noch mit einer ringförmigen Scheibe und einer kurzen Hülse verbunden und verstärkt.

Ein in den Figuren 3 und 4 ersichtliches, einlagiges Drahtgewebe 27 besitzt beispielsweise aus rostfreiem Stahl bestehende, einander kreuzende Drähte. Diese sind bei den Kreuzungsstellen fest sowie unbeweglich miteinander verbunden, nämlich versintert. Das Drahtgewebe 27 hat zwei zueinander parallele Ränder 28 und zwei zueinander parallele Ränder 29. Die Drähte des Drahtgewebes sind bei diesen Rändern 28, 29 zusammengeschweisst und miteinander verschmolzen. Das Drahtgewebe liegt in einer zur Achse 8 rotationssymmetrischen Fläche, hat die Form eines nicht ganz in sich geschlossenen, die Achse 8 annähernd umschliessenden Zylinders, besitzt eine Innenfläche sowie eine Aussenfläche und liegt mit der letzteren unmittelbar an der Innenfläche der zylindrischen Wand 11 an. Jeder der beiden Ränder 28 des Drahtgewebes 27 bildet annähernd einen Kreis und befindet sich bei der Innenfläche von einem der lochfreien, ringförmigen Wandabschnitte 17. Jeder der beiden Ränder 29 des Drahtgewebes ist gerade und befindet sich auf der Innenseite von einem der lochfreien, streifenförmigen Wandabschnitte 18. Die Randbereiche des Drahtgewebes ragen daher allseitig ein wenig über die Perforation der Wand 11 hinaus, so dass das Drahtgewebe alle Perforationslöcher 14 bedeckt. Das Drahtgewebe 27 liegt dabei im wesentlichen mit seiner ganzen Aussenfläche - nämlich mit Ausnahme der sich bei den Perforationslöchern 14 befindenden Aussenflächenabschnitteunmittelbar an der Innenfläche der zylindrischen Wand 11 an. Das Drahtgewebe ist ferner im wesentlichen bei seiner ganzen Aussenfläche unmittelbar sowie unlösbar an der Wand 11 befestigt, nämlich bei den Berührungsstellen der Drähte des Drahtgewebes und der Wand 11 an dieser festgesintert. Die Drähte des Drahtgewebes waren beispielsweise ursprünglich im Querschnitt überall kreisförmig. Beim fertigen und an der Wand 11 befestigten Drahtgewebe sind die Drähte beispielsweise im Querschnitt stellenweise immer noch ungefähr kreisförmig, jedoch mindestens bei den versinterten Stellen abgeflacht. Das Drahtgewebe hat Öffnungen oder Poren, deren lichte Maschenweite oder Porenweite deutlich kleiner ist als die lichte Weite der Perforationslöcher 14, d.h. als die Durchmesser der zylindrischen Lochabschnitte 15.

Es sei hier noch angemerkt, dass die Figuren 3 und 4 teilweise nicht massstäblich sind. In Fig. 3 sind insbesondere die Perforationslöcher im Vergleich zu den Trommelabmessungen mit übertriebenen Grössen und Abständen voneinander gezeichnet. Ferner sind die Drähte des Drahtgewebes 27 in Fig. 4 im Vergleich zur Dicke der Wand 11 mit übertriebenen Dicken gezeichnet. Zudem ist das Drahtgewebe vereinfacht, schematisch und mit runden Drähten dargestellt. Der maximale Durchmesser der Trommel 7, d.h. der Aussendurchmesser der zylindrischen Wand 11 bzw. des zylindrischen Mantels beträgt zum Beispiel 400 mm bis 2'000 mm. Die radial zur Achse 8 gemessene Dicke der zylindrischen Wand 11 liegt vorzugsweise im Bereich von 2 mm bis 5 mm und beträgt zum Beispiel etwa 3 mm bis 4 mm. Die lichte Weite der Perforationslöcher 14, d.h. der Durchmesser der zylindrischen Lochabschnitte liegt vorzugsweise im Bereich von 2 mm bis 4 mm und beträgt zum Beispiel ungefähr 2,5 mm bis 3 mm. Die lichte Maschenweite oder Porenweite des Drahtgewebes kann abhängig von den Teilchengrössen der zu verarbeitenden Güter festgelegt werden, beträgt typischerweise höchstens 1 mm und zum Beispiel ungefähr 0,1 mm bis 0,5 mm. Die Durchmesser und/oder sonstigen charakteristischen Dicken der Drähte betragen vorzugsweise ungefähr 0,05 mm bis 0,3 mm.

Die Trommel 7 ist bei der den Hals 21 umschliessenden Hülse mit nicht gezeichneten Lagermitteln um die Achse 8 drehbar gelagert und mit einer ebenfalls nicht gezeichneten Antriebsvorrichtung verbunden. Eine in der Fig. 2 gezeichnete, hohlzylindrische, an beiden Enden offene Hülse 31 ist im Gehäuse 3 koaxial zur Achse 8 befestigt. Das eine offene Ende der Hülse 31 ist dicht durch das Verschlusselement 4 abgeschlossen, wenn dieses sich in der in den Figuren 1 und 2 gezeichneten Schliess-Stellung befindet. Das andere offene Ende der Hülse 31 befindet sich im und/oder beim hohlen Hals 22 der Trommel 7, so dass der Trommel-Innenraum mit dem Innenraum der Hülse 31 verbunden ist, wobei die Verbindung eventuell mit einer Dichtung abgedichtet ist.

Das Gestell 2 ist mit in der Fig. 1 angedeuteten Führungsmitteln 32 versehen. Ferner sind Gas-Leitmittel 33 vorhanden, um Gas - beispielsweise Luft - durch den Trommel-Innenraum und mindestens einen Bereich des gasdurchlässigen Wandabschnitts 13 der Trommel 7 zu leiten. Die Gas-Leitmittel 33 weisen einen Gas-Übertragungsschuh 34 auf, der beipielsweise ungefähr gleich dem in der schon zitierten EP 0 137 151 A offenbarten Gas-Übertragungsschuh ist. Der Gas-Übertragungsschuh 34 ist von den Führungsmitteln 32 derart verschiebbar geführt, dass er in horizonzaler oder leicht geneigter Richtung gegen die Achse 8 und von dieser wegbewegt sowie durch eine verschliessbare Öffnung des Gehäuses 3 aus diesem herausgenommen werden kann. Ferner sind Fixiermittel vorhanden, um den Gas-Übertragungsschuh 34 in verschiedenen Stellungen und insbesondere in der in den Figuren 1 und 2 gezeichneten Betriebsstellung zu fixieren. Der Gas-Übertragungsschuh 34 liegt in der Betriebsstellung im einen der unteren Quadranten der Trommel mindestens einigermassen dicht an der zylindrischen Wand 11 der Trommel 7 an und bedeckt einen Bereich der Wand 11. Der vom Gas-Übertragungsschuh 34 bedeckte Bereich der Wand 11 erstreckt sich über die ganze axiale Ausdehnung des gasdurchlässigen Wandabschnitts 13 und über einen Umfangsektor von diesem. Der Gas-Übertragungsschuh 34 besteht aus einem hohlen Kasten und begrenzt eine Kammer. Der Gas-Übertragungsschuh hat auf seiner an der Wand 11 der Trommel anliegenden Seite eine Öffnung, so dass die Kammer gegen die Trommel hin offen ist. Die Gas-Leitmittel 33 weisen noch zwei Gasleitungen 36 und 37 auf. Die Gasleitung 36 mündet in den Innenraum der Hülse 31 oder in den zwischen der Wand des Gehäuses 3 und der Trommel 7 vorhandenen, freien Bereich des Gehäuse-Innenraums und ist also entweder durch die Hülse 31 oder durch den nicht vom Gas-Übertragungsschuh bedeckten Bereich des gasdurchlässigen Wandabschnitts 13 hindurch mit dem Trommel-Innenraum verbunden. Die Gasleitung 37 ist mit der Kammer des Gas-Übertragungsschuhs 34 verbunden. Die Gas-Leitmittel 33 weisen ferner verschiedene nicht gezeichnete, mit den Leitungen 36 und 37 verbundene Elemente, nämlich Filter, mindestens eine Pumpe mit einem Gebläse und beispielsweise noch mindestens ein Dosierorgan mit einer Klappe und eine Heizvorrichtung zum Erwärmen der zugeführten Luft oder des sonstigen zugeführten Gases auf. Ferner ist eine Sprühvorrichtung 39 mit einem durch das Verschlussorgan 4 hindurch in den Trommel-Innenraum hineinragenden Sprühorgan 40 verbunden, das einige entlang der Achse 8 verteilte Sprühdüsen aufweist.

Bei der Herstellung der Trommel 7 wird ein zur Bildung der zylindrischen Wand 11 dienendes, ebenes viereckförmiges, d.h. rechteck- oder eventuell quadratförmiges, Blechstück bereitgestellt, beispielsweise mit den erforderlichen Abmessungen von einer grösseren Blechtafel abgeschnitten. Ferner wird ein Drahtgewebe 27 bereitgestellt, beispielsweise von einem aufgewickelten Drahtgewebe-Vorrat abgerollt und auf die gewünschte Grösse zugeschnitten. Die Drähte des Drahtgewebes werden vor oder eventuell nach dem Zuschneiden des Drahtgewebes gegeneinander gedrückt und miteinander versintert. Nach dem Versintern der Drähte und nach dem Zuschneiden des Drahtgewebes 27 werden dessen Drähte bei den Rändern 28, 29 des Drahtgewebes 27 miteinander verschweisst. Dabei werden insbesondere die vorstehenden Drahtenden abgeschmolzen und mit anderen Drähten verschweisst, um zu verhindern, dass nachher beim Betrieb der Einrichtung bei den Rändern des Drahtgewebes Drahtstücke abbrechen und in ein mit der Einrichtung behandeltes Gut gelangen. Nachdem Verschweissen der Drahtgewebe-Ränder wird das ebene Drahtgewebe in einem Sinterofen an das zur Bildung der Wand 11 dienende, noch ebene Blechstück angedrückt und im wesentlichen bei der ganzen, dem Blechstück zugewandten Oberfläche das Drahtgewebe durch Sintern fest mit dem Blechstück verbunden. Danach werden das Blechstück sowie das an diesem befestigte Drahtgewebe gemeinsam zu einem Zylinder gebogen und die aneinander stossenden Ränder des Blechstücks miteinander verschweisst, so dass die Schweissnaht 12 entsteht und das Blechstück die zylindrische Wand 11 bildet. Die beiden konischen Wände 19 werden ebenfalls durch Biegen von ursprünglich ebenen Blechstücken und durch Verschweissen von aneinander anstossenden Rändern der Blechstücke gebildet und dann mit der zylindrischen Wand 11 verschweisst, wobei die Schweissnähte 20 entstehen. Von den beiden Hälsen 21, 22 wird mindestens der längere Hals 21 ebenfalls aus einem ursprünglich ebenen Blechstück gebildet und mit der restlichen Wandung 10 verschweisst.

Nun wird die Verwendung der Einrichtung zum chargenweisen Behandeln eines teilchenförmigen Gutes erläutert. Zuerst wird zum Beispiel das Verschlusselement 4 vorübergehend geöffnet und eine Charge des zu behandelnden, teilchenförmigen Gutes in den Trommel-Innenraum eingebracht. Dann wird die Trommel 7 in der in der Fig. 1 durch den Pfeil 43 bezeichneten Drehrichtung gedreht. Die an der Wand 11 der Trommel anliegenden Teilchen des Gutes werden durch die rotierende Trommel nach oben gehoben und rutschen oder kollern dann weiter innen wieder nach unten, so dass ein Teilchen-Bett 44 mit bewegten Teilchen entsteht. Das Teilchen-Bett 44 bedeckt einen Bereich des gasdurchlässigen Wandabschnitts 13, wobei sich dieser Bereich über die ganze Öffnung des Gas-Übertragungsschuhs 34 erstreckt. Ferner wird mit den Gas-Leitmitteln 33 Luft durch die Gas-Leitung 36 zugeführt und durch die Gasleitung 37 abgesaugt, wie es in der Fig. 1 durch die Pfeile 45 und 46 angedeutet ist. Diese Luft strömt vom freien Bereich des Trommel-Innenraums durch das Teilchen-Bett 44 und durch den vom Gas-Übertragungsschuh 34 bedeckten Bereich des gasdurchlässigen Wandabschnitts 13 hindurch in die Kammer des Gas-Übertragungsschuhs 34. Des weiteren wird zeitweise ein mindestens teilweise flüssiges, beispielsweise aus einer Lösung und/oder Dispersion bestehendes Sprühmaterial mit der Sprühvorrichtung 39 auf die Teilchen gesprüht. Das Sprühmaterial kann beispielsweise ein Bindemittel zum Agglomerieren sowie Pelletisieren der Teilchen oder ein Überzugsmaterial zum Überziehen der Teilchen enthalten. Im übrigen besteht die Möglichkeit, die Teilchen zuerst zu grösseren Teilchen - beispielsweise Pellets - zu agglomerieren und diese danach noch mit einem Überzug zu versehen. Wenn die Teilchen agglomeriert und/oder mit Überzügen versehen sind, können die Teilchen noch während einer gewissen Zeitdauer ohne Besprühung in der Trommel bewegt und mit der durch das Teilchen-Bett hindurch geleiteten Luft getrocknet werden. Die zugeführte Luft kann dabei mindestens zeitweise erwärmt werden. Wenn die Teilchen trocken sind, kann man zum Beispiel das Verschlusselement 4 öffnen und die Teilchen durch die beim Verschlusselement 4 vorhandene Öffnung des Gehäuses 3 hindurch aus der Trommel herausnehmen.

Wenn die Trommel 7 entleert ist, können diese und der Gehäuse-Innenraum von Zeit zu Zeit und insbesondere vor einem Wechsel des Produkts gereinigt werden. Hierzu kann man den Gas-Übertragungsschuh 34 zum Beispiel durch eine beim normalen Betrieb verschlossene Öffnung des Gehäuses 3 aus diesem herausnehmen. Ferner kann man mit nicht gezeichneten, im Gehäuse 3 eingebauten Reinigungs-Sprühdüsen sowie mit vorübergehend in den Trommel-Innenraum eingeschobenen Reinigungs-Sprühdüsen und/oder eventuell mit den Sprühdüsen 41 eine Reinigungsflüssigkeit gegen die Innenflächen des Gehäuses 3 und gegen die Aussenflächen sowie die Innenflächen der Wandung 10 und insbesondere auch des Drahtgewebes 27 der Trommel sprühen und die Reinigungsflüssigkeit durch eine im Boden des Gehäuses vorhandene, beim normalen Betrieb verschlossene Öffnung aus dem Gehäuse herausleiten.

Die zum Teil in Fig. 5 ersichtliche Trommel 7 hat eine zylindrische Wand 11, deren mittlerer Wandabschnitt 13 gleich oder ähnlich perforiert ist wie bei der vorher beschriebenen Trommel. Die Trommel gemäss Fig. 5 weist jedoch anstelle des einlagigen Drahtgewebes 27 ein mehrlagiges Drehtgewebe 51 auf. Dieses besitzt mindestens zwei Drahtgewebe-Lagen und nämlich zum Beispiel eine erste Drahtgewebe-Lage 52, eine zweite Drahtgewebe-Lage 53 und eine dritte Drahtgewebe-Lage 54. Jede Drahtgewebe-Lage 52, 53, 54 besteht aus miteinander versinterten Drähten. Die drei Drahtgewebe-Lagen sind zudem bei den Berührungsstellen ihrer Drähte auch miteinander versintert. Die erste Drahtgewebe-Lage 52 liegt an der Innenfläche der Wand 12 an und besteht aus relativ groben Drähten. Die zweite, mittlere Drahtgewebe-Lage 53 hat feinere Drähte und engere Poren bzw. kleinere lichte Maschenweiten als die erste Drahtgewebe-Lage. Die dritte Drahtgewebe-Lage 54 grenzt an den freien Trommel-Innenraum an und besitzt dickere Drähte sowie weitere Poren bzw. grössere lichte Maschenweiten als die zweite Drahtgewebe-Lage 53. Die innerste Drahtgewebe-Lage 52 und die äusserste Drahtgewebe-Lage 54 können gleiche oder verschiedene Drahtdicken und gleiche oder verschiedene lichte Maschenweiten haben. Die zweite, mittlere Drahtgewebe-Lage 53 legt also die Mindestgrösse der vom mehrlagigen Drahtgewebe 51 zurückgehaltenen Teilchen fest. Die erste Drahtgewebe-Lage 52 dient als Stütz-Drahtgewebe-Lage, um die zweite, feinere Drahtgewebe-Lage 53 bei den Öffnungen der Perforationslöcher 14 abzustützen. Die dritte, an den freien Trommel-Innenraum angrenzende Drahtgewebe-Lage 54 dient als Schutz-Drahtgewebe-Lage zum Schützen der feineren Drahtgewebe-Lage 53. Die lichte Maschenweite kann mindestens bei der zweiten, die kleinste Maschenweite aufweisenden Drahtgewebe-Lage 53 gleich wie beim einlagigen Drahtgewebe 27 höchstens 1 mm und zum Beispiel ungefähr 0,1 mm bis 0,5 mm oder sogar noch weniger als 0,1 mm betragen. Das Drahtgewebe 51 hat vier Ränder, von denen einer in Fig. 5 ersichtlich und mit 55 bezeichnet ist. Die Drähte der drei Drahtgewebe-Lagen sind bei den vier Rändern des Drahtgewebes miteinander verschweisst. Soweit vorgängig nicht anderes geschrieben wurde, kann die teilweise in Fig. 5 ersichtliche Trommel gleich oder ähnlich ausgebildet sein wie die anhand der Figuren 1 bis 4 beschriebene Trommel.

Die Einrichtung kann noch auf andere Arten geändert werden.

Das Drahtgewebe könnte beispielsweise zwei Drahtgewebe-Lagen aufweisen, von denen die eine die Mindestgrösse der zurückgehaltenen Teilchen festlegt und die andere dickere Drähte sowie grössere lichte Maschenweiten hat und entweder an der Innenfläche der perforierten Wand anliegt oder an den freien Innenraum der Trommel angrenzt.

Das Drahtgewebe kann sich eventuell bei der Herstellung der zylindrischen Wand 11 bis unmittelbar zu den aneinander anstossenden, bei der fertigen Trommel durch die Schweissnaht 12 miteinander verbundenen Rändern des die Wand 11 bildenden Blechstücks erstrecken. Das Drahtgewebe erstreckt sich dann bei der fertigen Trommel entlang dem ganzen Umfang der perforierten Wand.

Anstelle eines einzigen Drahtgewebes könnte man zwei oder mehr Drahtgewebe vorsehen, die an verschiedenen Bereichen der perforierten Wand befestigt sind.

Die zylindrische Wand kann zudem eine Entnahme-Öffnung aufweisen, die mit einem verstellbaren Verschlussorgan, beispielsweise einer verschwenkbar an der restlichen Wand gehaltenen Klappe, wahlweise verschlossen oder zum Entnehmen des in der Trommel enthaltenen Gutes freigegeben werden kann. Das Verschlussorgan kann beispielsweise mit einer an der Trommel befestigten pneumatischen Stellvorrichtung verstellt werden, die ähnlich ausgebildet ist wie bei der bereits zitierten EP 0 137 151 A und der entsprechenden US 4 543 906 A. Das zur Bildung der zylindrischen Wand dienende Blechstück kann dann ein zur Bildung der Entnahmeöffnung dienendes Loch oder bei mindestens einem seiner beiden nachher miteinander verschweißten Ränder einen Einschnitt aufweisen. Die zylindrische Wand kann jedoch statt dessen auch aus zwei Blechstücken gebildet werden, von denen sich das eine, größere über den größten Teil des Umfangs erstreckt und das andere, kleinere, streifenförmige die Entnahme-Öffnung begrenzt, wobei dann mindestens das grössere Blechstück perforiert ist. In diesem Fall sind dann die axialen Ränder des größeren, perforierten Blechstücks mindestens zum Teil nicht mehr unmittelbar, sondern nur mittelbar über das kleinere Blechstück miteinander verbunden. Eventuell können dann auch zwei oder mehr Drahtgewebe vorhanden sein, die an verschiedenen, perforierten Wandabschnitten befestigt sind und zusammen alle Perforationslöcher gegen den freien Innenraum der Trommel abdecken. Das Verschlussorgan zum Verschliessen der Entnahme-Öffnung kann beispielsweise kompakt sowie lochfrei sein. Das Drahtgewebe wird dann derart bemessen, dass es die Wand im Bereich der verschliessbaren Öffnung nicht bedeckt. Es ist jedoch auch möglich, das Verschlussorgan ebenfalls als gasdurchlässigen, perforierten Wandabschnitt mit Perforationslöchern auszubilden und die letzteren auf der Innenseite des Verschlussorgans mit einem an diesem befestigten, separaten Drahtgewebe zu bedecken.

Die Trommel kann ferner mit in ihrem Innenraum angeordneten, an den konischen Wänden 19 befestigten Schaufeln oder sonstigen Förderelementen versehen sein, um Teilchen eines sich in der Trommel befindenden Gutes beim Drehen der Trommel auch in axialer Richtung zu bewegen und die Durchmischung des Gutes zu verbessern.

Des weiteren können der gasdurchlässige Wandabschnitt und das an diesem angeordnete Drahtgewebe statt zylindrisch möglicherweise mindestens zum Teil im wesentlichen konisch sein.

Ferner kann man den Innenraum des Gas-Übertragungsschuhs durch eine zur Achse der Trommel parallele Wand in zwei Kammern unterteilen. Zudem kann man dann bei gewissen Behandlungen Luft aus einer dieser Kammern durch den gasdurchlässigen Wandabschnitt der Trommel hindurch in diese hinein leiten und gleichzeitig Luft aus der Trommel heraus durch deren Wand hindurch in die andere Kammer des Gas-Übertragungsschuhs hinein leiten. Des weiteren kann man anstelle von Luft ein anderes Gas, beispielsweise Stickstoff durch den gasdurchlässigen Wandabschnitt der Trommel hindurch aus dieser hinaus und/oder in diese hinein leiten.

## Patentansprüche

1. Trommel mit einem Innenraum zum Aufnehmen und Bewegen eines teilchenförmigen Gutes, einer Achse (8), einer diese umschliessenden, Perforationslöcher (14) und eine Innenfläche aufweisendend, metallischen Wand (11), wobei die Perforationslöcher (14) durch mindestens ein Gewebe vom Innenraum getrennt sind und das bzw. jedes Gewebe eine Aussenfläche und eine lichte Maschenweite hat, die kleiner ist als eine lichte Weite der Perforationslöcher (14), **dadurch gekennzeichnet, dass** das bzw. jedes Gewebe ein Drahtgewebe (27, 51) ist, im wesentlichen mit seiner ganzen Aussenfläche an der Innenfläche der Wand (11) anliegt und im wesentlichen bei seiner ganzen Aussenfläche durch Ansintern an der Wand (11) befestigt ist.

2. Trommel nach Anspruch 1, **dadurch gekennzeichnet, dass** das bzw. jedes Drahtgewebe (27, 51) miteinander versinterte Drähte aufweist.

3. Trommel nach einem der Ansprüche 1 oder 2, **dadurch gekennzeichnet, dass** das bzw. jedes Drahtgewebe (27, 51) Ränder (28, 29, 55) und Drähte aufweist, die bei den Rändern miteinander verschweisst sind.

4. Trommel nach einem der Ansprüche 1 bis 3, **dadurch gekennzeichnet, dass** das bzw. mindestens ein Drahtgewebe (27) einlagig ist.

5. Trommel nach Anspruch 4, **dadurch gekennzeichnet, dass** das bzw. jedes Drahtgewebe (27) eine lichte Maschenweite von höchstens 1 mm hat.

6. Trommel nach einem der Ansprüche 1 bis 3, **dadurch gekennzeichnet, dass** das bzw. mindestens ein Drahtgewebe (51) mindestens zwei aufeinander aufliegende Drahtgewebe-Lagen (52, 53, 54) mit verschiedenen lichten Maschenweiten aufweist.

7. Trommel nach Anspruch 6, **dadurch gekennzeichnet, dass** mindestens eine Drahtgewebe-Lage (53) eine lichte Maschenweite von höchstens 1 mm hat.

8. Einrichtung mit einer Trommel (7) nach einem der Ansprüche 1 bis 7, **dadurch gekennzeichnet, dass** die Trommel (7) in einem Gestell (2) drehbar um die Achse (8) gelagert ist und dass Gas-Leitmittel (33) vorhanden sind, um bei rotierender Trommel (7) Gas in mindestens einen Bereich der Wand (11) durch die Perforationslöcher (14) und durch das Drahtgewebe (27, 51) hindurch zu leiten.

9. Einrichtung nach Anspruch 8, **dadurch gekennzeichnet, dass** die Gas-Leitmittel (33) einen Gas-Übertragungsschuh (34) und Mittel aufweisen, um diesen bei rotierender Trommel (7) derart am Gestell (2) festzuhalten, dass er an einem Bereich der Aussenfläche der Wand (11) anliegt, um Gas durch Perforationslöcher (14) der Wand (11) sowie das bzw. mindestens ein Drahtgewebe (27, 51) hindurch zu leiten.

10. Verfahren zur Herstellung einer Trommel nach einem der Ansprüche 1 bis 7, wobei mindestens ein zur Bildung der Wand (11) dienendes, Perforationslöcher (14) aufweisendes, im wesentlichen ebenes Blechstück hergestellt wird, **dadurch gekennzeichnet, dass** mindestens ein im wesentlichen ebenes Drahtgewebe (28, 51) hergestellt, mit einer bei der fertigen Trommel die Aussenfläche des Drahtgewebes (27, 51) bildenden Fläche zum Anliegen an einer nachher bei der fertigen Trommel die Innenfläche der Wand (11) bildenden Fläche des Blechstücks zum Anliegen gebracht und im wesentlichen bei seiner ganzen Aussenfläche durch Ansintern am Blechstuck befestigt wird, dass das Blechstück zusammen mit dem bzw. jedem an ihm befestigten Drahtgewebe (27, 51) gebogen wird und dass Ränder des Blechstücks unmittelbar und/oder mittelbar miteinander verbunden werden.

## Claims

1. Drum having an interior space for holding and moving a particulate material, an axis (8) and a metallic wall (11) enclosing said axis and having perforation holes (14) and an inner surface, the perforation holes (14) being separated from the interior space by at least one fabric and the or each fabric having an outer surface and an internal mesh size which is smaller than an internal diameter of the perforation holes (14), **characterized in that** the or each fabric is a wire fabric (27, 51), rests essentially over its entire outer surface against the inner surface of the wall (11) and is fastened essentially over its entire outer surface by sintering to the wall (11).

2. Drum according to Claim 1, **characterized in that** the or each wire fabric (27, 51) has wires sintered to one another.

3. Drum according to either of Claims 1 and 2, **characterized in that** the or each wire fabric (27, 51) has edges (28, 29, 55) and wires which are welded to one another at the edges.

4. Drum according to any of Claims 1 to 3, **characterized in that** the or at least one wire fabric (27) has one layer.

5. Drum according to Claim 4, **characterized in that** the or each wire fabric (27) has an internal mesh size of at most 1 mm.

6. Drum according to any of Claims 1 to 3, **characterized in that** the or at least one wire fabric (51) has at least two wire fabric layers (52, 53, 54) lying one on top of the other and having different internal mesh sizes.

7. Drum according to Claim 6, **characterized in that** at least one wire fabric layer (53) has an internal mesh size of at most 1 mm.

8. Device having a drum (7) according to any of Claims 1 to 7, **characterized in that** the drum (7) is mounted rotatably about the axis (8) in a stand (2) and that gas transport means (33) are present for passing gas through the perforation holes (14) and through the wire fabric (27, 51) into at least one part of the wall (11) when the drum (7) is rotating.

9. Device according to Claim 8, **characterized in that** the gas transport means (33) have a gas transport box (34) and means for holding said box on the stand (2) when the drum (7) is rotating, in such a way that said box rests against a region of the outer surface of the wall (11) for passing gas through perforation holes (14) of the wall (11) and through the or at least one wire fabric (27, 51).

10. Process for the production of a drum according to any of Claims 1 to 7, at least one essentially flat sheet metal piece serving to form the wall (11) and having perforation holes (14) being produced, **characterized in that** at least one essentially flat wire fabric (28, 51) is produced, is caused to rest, with a surface forming the outer surface of the wire fabric (27, 51) in the completed drum, against a surface of the sheet metal piece which subsequently forms the inner surface of the wall (11) in the completed drum, and is fastened essentially over its entire outer surface by sintering to the sheet metal piece, that the sheet metal piece, together with the or each wire fabric (27, 51) fastened to it, is curved and that edges of the sheet metal piece are connected directly and/or indirectly to one another.

## Revendications

1. Tambour comprenant un espace intérieur destiné à recevoir et à déplacer une matière en fines particules, un axe (8), une paroi métallique (11) entourant ce dernier et présentant des perforations (14) et une surface intérieure, les perforations (14) étant séparées de l'espace intérieur par au moins un tissu et le ou chaque tissu comportant une surface extérieure et une largeur de mailles qui soit inférieure à une largeur des perforations (14), **caractérisé en ce que** le ou chaque tissu est une toile métallique (27, 51) dont essentiellement l'ensemble de sa surface extérieure est appliquée contre la surface intérieure de la paroi (11) et qui est fixée à la paroi (11) par frittage essentiellement avec la totalité de sa surface extérieure.

2. Tambour selon la revendication 1, **caractérisé en ce que** la ou chaque toile métallique (27, 51) présente des fils métalliques frittés entre eux.

3. Tambour selon la revendication 1 ou 2, **caractérisé en ce que** la ou chaque toile métallique (27, 51) présente des bords (28, 29, 55) et des fils métalliques qui sont soudés entre eux au niveau des bords.

4. Tambour selon l'une des revendications 1 à 3, **caractérisé en ce que** la ou au moins une toile métallique (27) est monocouche.

5. Tambour selon la revendication 4, **caractérisé en ce que** la ou chaque toile métallique (27) présente une largeur de mailles de 1 mm au maximum.

6. Tambour selon l'une des revendications 1 à 3, **caractérisé en ce que** la ou au moins une toile métallique (51) présente au moins deux couches de toile métallique superposées (52, 53, 54).

7. Tambour selon la revendication 6, **caractérisé en ce qu'**au moins une couche de toile métallique (53) présente une largeur de mailles de 1 mm au maximum.

8. Dispositif comprenant un tambour (7) selon l'une des revendications 1 à 7, **caractérisé en ce que** le tambour (7) est monté dans un bâti (2) de manière à pouvoir tourner autour de l'axe (8), et **en ce que** des moyens pour amener du gaz (33) sont prévus pour injecter du gaz à travers les perforations (14) et la toile métallique (27, 51) dans au moins une partie de la paroi (11) lorsque le tambour (7) tourne.

9. Dispositif selon la revendication 8, **caractérisé en ce que** les moyens pour amener du gaz (33) présentent un diffuseur de gaz (34) et des moyens pour maintenir ce dernier sur le bâti (2) pendant que le tambour (7) tourne, de telle manière qu'il soit appliqué contre une partie de la surface extérieure de la paroi (11) afin de laisser le gaz passer à travers des perforations (14) de la paroi (11) et à travers la ou au moins une toile métallique (27, 51).

10. Procédé pour fabriquer un tambour selon l'une des revendications 1 à 7, sachant que l'on fabrique au moins une pièce de tôle essentiellement plane présentant des perforations (14) et servant à former la paroi (11), **caractérisé en ce que** l'on fabrique une toile métallique (28, 51) essentiellement plane et qu'on l'applique avec une surface constituant la surface extérieure de la toile métallique (27, 51) du tambour fini contre une surface de la pièce de tôle représentant ultérieurement, sur le tambour achevé, la surface intérieure de la paroi (11), avant de la fixer par frittage, essentiellement avec l'ensemble de sa surface extérieure, sur la pièce de tôle, **en ce que** la pièce de tôle avec la ou chaque toile métallique (27, 51) qui y est fixée est cintrée, et **en ce que** les bords de la pièce de tôle sont reliés entre eux directement et/ou indirectement.
